# EUROPEAN PATENT APPLICATION

(11) **EP 4 471 676 A1**
(43) Date of publication of application: **04.12.2024**
(21) Application number: 24160110.3
(22) Date of filing: 27.02.2024
(51) Int. Cl.: G06N 20/00, G06N 3/0464, G06N 3/0455

(54) **ANOMALY DETECTION DEVICE, ANOMALY DETECTION METHOD AND COMPUTER PROGRAM PRODUCT**

(30) Priority: 30.05.2023 JP 2023088898
(71) Applicant: Kabushiki Kaisha Toshiba, Tokyo 105-0023 (JP)
(72) Inventor: KAWAMURA, Naoki, Tokyo (JP); NODA, Reiko, Tokyo (JP); ITO, Satoshi, Tokyo (JP)
(74) Representative: Marks & Clerk LLP

(57) **Abstract**

According to one arrangement, an anomaly detection device includes a feature calculating unit, a first selecting unit, an anomaly degree data calculating unit. The feature calculating unit calculates or refers to a first-type feature of each of plural pieces of training data, and calculates or refers to a second-type feature of target data for detection. The first selecting unit selects, based on first-type attached information corresponding to each of the plural pieces of training data, at least one or more of plural first-type features. The anomaly degree data calculating unit calculates anomaly degree data indicating a degree of anomaly in the target data for detection, using the selected first-type feature and using the second-type feature.

## Description

### FIELD

Arrangements described herein relate generally to an anomaly detection device, an anomaly detection method, and a computer program product.

### BACKGROUND

A system for detecting anomalies in the target data for detection, such as images, is known. For example, a technology has been disclosed in which only the normal data is taught as training data and, using an autoencoder that has been learnt using the normal data, subtraction processing of the target region in an image is performed and anomalies are detected. Moreover, for example, a technology has been disclosed in which anomaly detection is performed using the difference in the feature space of a pre-trained convolution neural network (CNN).

However, in the conventional technology, anomaly detection is performed using plural similar pieces of training data, that is, using plural biased pieces of training data; and there are times when the bias in the training data causes a decline in the accuracy of anomaly detection. Moreover, in the conventional technology, an operation is performed to thin out the dataset samples using the features (feature values or feature tensors) of the actual training data, and an operation is performed to reduce the number of dimensions of the feature vectors of the training data. However, the local bias in the training data is not held down, thereby sometimes resulting in a decline in the accuracy of anomaly detection. Thus, in the conventional technology, there are times when the accuracy of anomaly detection undergoes a decline.

### BRIEF DESCRIPTION OF THE DRAWINGS

Fig. 1 is a schematic diagram of an anomaly detection device according to an arrangement;
Fig. 2 is a flowchart for explaining a flow of the information processing;
Fig. 3 is a schematic diagram of an anomaly detection device according to an arrangement;
Fig. 4 is a flowchart for explaining a flow of the information processing; and
Fig. 5 is a hardware configuration diagram.

### DETAILED DESCRIPTION

Exemplary arrangements of an anomaly detection device, an anomaly detection method, and a computer program product will be explained below in detail with reference to the accompanying drawings.

### First arrangement

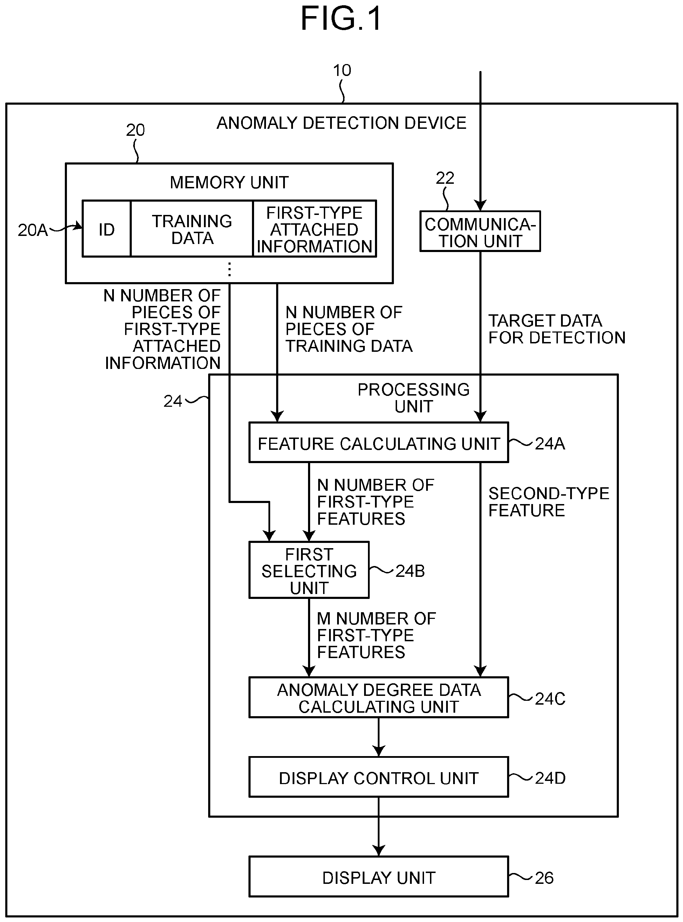

Fig. 1 is a schematic diagram illustrating an example of an anomaly detection device 10 that executes an anomaly detection program according to a first arrangement and implements an anomaly detection method according to the first arrangement.

The anomaly detection device 10 is a computer that detects anomalies in the target data for detection.

The target data for detection represents the data in which anomalies are to be detected. Herein, an anomaly implies any abnormal patterns that are not usually encountered, or implies a state that has deviated from normalcy in the target data.

The target data for detection is in the form of, for example, image data. Herein, image data implies captured image data that is acquired using a camera, or implies image data such as CAD data (CAD stands for Computer Aided Design) created using a computer. Examples of the captured image data include: image data of a subject captured using a camera; frame image data included in video data captured using an in-vehicle camera; and image data of a patient captured using an MRI device (MRI stands for Magnetic Resonance Imaging). Herein, examples of a subject include, but are not limited to, a factory product, a human body, and a scenery. In the first arrangement, the explanation is given about an example in which the target data for detection represents captured image data that is acquired using a camera. Moreover, in the following explanation, the captured image data is sometimes simply referred to as image data.

The anomaly detection device 10 includes a memory unit 20, a communication unit 22, a processing unit 24, and a display unit 26. The memory unit 20, the communication unit 22, the processing unit 24, and the display unit 26 are connected to each other in a communicable manner.

The memory unit 20 is used to store a variety of data. Examples of the memory unit 20 include a semiconductor memory device such as a random access memory (RAM) or a flash memory; a hard disk; and an optical disc. Alternatively, the memory unit 20 can be a storage device installed on the outside of the anomaly detection device 10. Still alternatively, the memory unit 20 can be a memory medium. More particularly, the memory medium can be used to store or to temporarily store computer programs and a variety of information via a local area network (LAN) or the Internet. Meanwhile, the memory unit 20 can be configured from a plurality of memory mediums.

In the first arrangement, the memory unit 20 is used to store training data database (DB) 20A.

In the training data DB 20A, plural pieces of training data is stored in a corresponding manner to respective pieces of first-type attached information. Meanwhile, the training data DB 20A can have the data format of a table, and is not limited to be a database. In the first arrangement, the explanation is given about an example in which the training data DB 20A is used to register the following information in a corresponding manner: IDs (identification) representing identification information of the pieces of training data; the pieces of training data; and the pieces of first-type attached information.

The training data is acquired in advance before acquiring the target data for detection. The training data is, for example, in the form of image data. In the first arrangement, the explanation is given about an example in which the training data is in the form of image data.

Moreover, in the first arrangement, the explanation is given about an example in which the target data for detection as well as the training data is in the form of image data. However, the anomaly detection device 10 can be implemented also in detecting anomalies in a variety of data other than the image data. For example, as long as the target data for detection and the training data enables expressing the observation values as scalars, vectors, or multidimensional tensors, such as sound data, time-series video data, or skeleton data in which the postures of a human body are specified as graphs; the data is not limited to be in the form of image data.

Among plural pieces of training data registered in the training data DB 20A, as long as at least one or more pieces of training data having an identical format to the target data for detection are included, it serves the purpose. Herein, having an identical format implies belonging to the same classification when data is classified into plural groups according to predetermined rules. For example, having an identical format implies that both concerned pieces of data represent image data, or represent time-series video data, or represent sound data, or represent skeleton data.

In that regard, in the first arrangement, the explanation is given about an example in which the target data for detection as well as the training data is in the form of image data.

In the training data DB 20A, image data that contains captured images acquired by capturing the same photographic subject as the photographic subject in the target data for detection and that does not contain anomaly sections is desirably registered in advance as the training data.

For example, consider a case in which the photographic subject in the captured image data, which represents the target data for detection, is an object having a defect. For example, consider a case in which a gear represents the object and a captured image of a gear having a defect represents the target data for detection. In that case, from among plural pieces of training data registered in the training data DB 20A, it is desirable that at least one or more pieces of training data represent the captured image data matching with or similar to a gear not having any defect.

Moreover, consider a case in which the scenery at a particular place represents the photographic subject of a captured image representing the target data for detection. For example, consider a case in which, from a video of a scenery at a particular place, the captured image of a single frame represents the target data for detection. In that case, from among plural pieces of training data registered in the training data DB 20A, at least one or more pieces of training data desirably represent the captured image data of a scenery including an object that is same as or similar to the object included in the scenery captured in the target data for detection and that does not have any anomaly such as a defect.

A set of first-type attached information represents information related to a set of training data and represents the attached information with respect to that set of training data. In the first arrangement, a set of first-type attached information represents information indicating the acquisition conditions for the corresponding set of training data. That is, although the first-type attached information represents information related to the training data, the first-type attached information is acquired according to a different sensor or a different method than the training data. The acquisition conditions for acquiring a set of training data include at least one of the following conditions related to that set of training data: the acquisition timing, the acquisition environment, the acquisition source, and the type.

The acquisition timing implies the timing at which each set of training data is acquired. When the training data is in the form of the image data, the acquisition timing represents, for example, the capturing timing. Herein, the capturing timing is expressed using, for example, the capturing date and time. When the training data is in the form of sound data, the acquisition timing represents, for example, the sound generation timing. Herein, the sound generation timing is expressed using, for example, the sound observation timing or the date and time of sound generation.

The acquisition environment implies the environment in which the training data is acquired. Herein, the environment indicates the location, the situation, the brightness, and the climate conditions. When the training data is in the form of image data, the acquisition environment implies the capturing environment at the time of capturing the imaging data.

The location indicates the acquisition location of the training data. More particularly, when the training data is in the form of image data, the location indicates the capturing position. Herein, the capturing position is expressed using the positional coordinates measured at the time of capturing the image data in a camera using the global positioning system (GPS) installed in the camera. Alternatively, for example, the capturing position can be expressed using the area name indicating the capturing location. When the training data is in the form of sound data, the location indicates the sound data acquisition location such as the sound measurement position or the sound collection position.

The situation indicates the situation at the time of acquiring the training data. The brightness indicates the brightness of the environment at the time of acquiring the training data. The climate conditions indicate the climate such as the weather, the humidity, the temperature, the atmospheric pressure, and the wind speed at the time of acquiring the training data.

The acquisition source of the training data indicates identification information about the source from which the training data is acquired. For example, when the training data is in the form of image data, the acquisition source of the training data represents information enabling identification of the camera that captured the training data and represents information related to the elements identified by the training data. Herein, the information related to the elements identified by the training data can contain: profile information of the user such as a patient representing the photographic subject included in the training data; medical record information of the user; and information related to the manufacturing or the production conditions of an article representing the photographic subject included in the training data. When the training data is in the form of sound data, the acquisition source of the training data represents information indicating the sound generation source.

The type of the training data implies the type of the data included in the training data. For example, when the training data is in the form of image data, the type of the training data represents information indicating the image format. When the training data is in the form of sound data, the type of the training data represents information indicating the language in which the sound is uttered.

As long as the first-type attached information contains information indicating at least one of the acquisition conditions explained above, it serves the purpose. Thus, the first-type attached information can contain information indicating plural types of acquisition conditions.

In the training data DB 20A, the following information is registered in advance in a corresponding manner: the ID of each of plural pieces of training data; the set of training data identified by each ID; and the first-type attached information of each set of training data.

Meanwhile, as long as the pieces of training data and the respective pieces of first-type attached information are stored in a corresponding manner, it serves the purpose. Thus, that information is not limited to be registered in a corresponding manner in a single training data DB 20A. For example, the pieces of training data and the pieces of first-type attached information can be stored in mutually different memory areas or in different memory mediums. More particularly, the configuration can be such that datasets in which IDs and the pieces of training data identified by those IDs are held in a corresponding manner and datasets in which IDs and the pieces of first-type attached information of the pieces of training data identified by those IDs are held in a corresponding manner can be stored in different memory areas or in different memory mediums.

The communication unit 22 communicates with other information processing devices via a known communication network such as a network.

The processing unit 24 performs a variety of information processing. Regarding the processing unit 24, the details are given later.

The display unit 26 is used to display a variety of information. Examples of the display unit 26 include a display and a projector device. Meanwhile, the anomaly detection device 10 can further include an input unit that receives operation instructions from the user. Examples of the input unit include a keyboard, a mouse, and a microphone. Moreover, the display unit 26 and the input unit can be integrated together to constitute a touch-sensitive panel.

Meanwhile, at least either the memory unit 20 or the processing unit 24 can be installed in an external information processing device such as a server device that is connected via the network and the communication unit 22. Moreover, at least some of the information stored in the memory unit 20 can be alternatively stored in an external information processing device such as a server device that is connected to the processing unit 24 via the network and the communication unit 22. Furthermore, at least some of the functional units of the processing unit 24 (explained later) can be alternatively installed in an external information processing device such as a server device that is connected to the processing unit 24 via the network and the communication unit 22.

Given below is the detailed explanation about the processing unit 24.

The processing unit 24 includes a feature calculating unit 24A, a first selecting unit 24B, an anomaly degree data calculating unit 24C, and a display control unit 24D.

From among the feature calculating unit 24A, the first selecting unit 24B, the anomaly degree data calculating unit 24C, and the display control unit 24D, at least one unit is implemented using, for example, one or more processors. For example, each of the abovementioned units can be implemented by causing a processor such as a central processing unit (CPU) to execute a computer program, that is, can be implemented using software. Alternatively, the abovementioned units can be implemented using a processor such as a dedicated integrated circuit (IC), that is, can be implemented using hardware. Still alternatively, the abovementioned units can be implemented using a combination of software and hardware. When a plurality of processors is used, each processor can be used to implement one of the units or to implement two or more units.

The feature calculating unit 24A calculates or refers to a first-type feature of each of plural pieces of training data, and calculates or refers to a second-type feature of the target data for detection.

In the first arrangement, the feature calculating unit 24A acquires plural pieces of training data. For example, the feature calculating unit 24A reads all of plural pieces of training data registered in the training data DB 20A, and thus acquires plural pieces of training data. In the first arrangement, the explanation is given about a case in which the feature calculating unit 24A reads N number of pieces of training data. Herein, N is an integer equal to or greater than "2". Then, the feature calculating unit 24A calculates the first-type feature of each of the plural acquired pieces of training data.

Moreover, the feature calculating unit 24A acquires the target data for detection from an external information processing device via the communication unit 22. Then, the feature calculating unit 24A calculates or refers to the second-type feature of the target data for detection. Herein, the feature calculating unit 24A calculates or refers to the second-type feature of a single set of target data for detection.

The first-type features and the second-type feature represent the features of data. A feature includes at least either a feature map or a feature vector. In the first arrangement, the explanation is given about an example in which the feature calculating unit 24A calculates the feature map as well as the feature vector as each first-type feature and as the second-type feature.

In a feature map, the position of each set of training data and the target data for detection or the feature value of each element of each set of training data and the target data for detection is extracted as a scalar or a vector.

As explained above, in the first arrangement, the explanation is given about an example in which the training data and the target data for detection is in the form of image data. In that case, for example, in a feature map, the pixel value of each pixel constituting the image data is expressed as a feature value. Moreover, for example, a feature map is output in an intermediate layer when the image data is input to a pre-trained CNN.

Meanwhile, for example, when the training data and the target data for detection is in the form of sound data, waveform data can be used in which the element value of each set of sound data is expressed as a feature value. In that case, for example, in a feature map, each element value constituting the sound data is expressed as a feature value. Moreover, for example, a feature map is output in an intermediate layer when the sound data is input to a pre-trained CNN.

The pre-trained CNN has been trained using an arbitrary large-scale dataset. As a pre-trained CNN, for example, a CNN is known that has learnt an image classification task using the ImageNet dataset.

In a feature vector, the features indicated by each set of training data and the target data for detection are specified in the form of a vector. As a feature vector, for example, a feature vector is known that is output in the fully-connected layer when image data is input to a pre-trained CNN. Meanwhile, when the training data and the target data for detection is in the form of sound data; as a feature vector, for example, a feature vector is known that is output in the fully-connected layer when sound data is input to a pre-trained neural network.

The feature calculating unit 24A calculates the first-type feature of each of N number of pieces of training data, and outputs the N number of first-type features to the first selecting unit 24B. Thus, the feature calculating unit 24A outputs, to the first selecting unit 24B, the data in which the N number of first-type features are associated to the IDs of the pieces of training data from which the first-type features are calculated. Moreover, the feature calculating unit 24A outputs the second-type feature of the target data for detection to the anomaly degree data calculating unit 24C.

Furthermore, the feature calculating unit 24A can also store, in the training data DB 20A, the calculated first-type features of the pieces of training data in a corresponding manner to the pieces of training data used in the calculation. As a result, regarding the pieces of training data from which the first-type features are already calculated, the feature calculating unit 24A can skip the calculation of the first-type features.

Alternatively, the feature calculating unit 24A can search the training data DB 20A for N number of pieces of training data that represent image data of the captured images of the photographic subject of the same type as the target data for detection and that do not include anomaly sections; and can then calculate the corresponding first-type features. In order to search for the captured images of a photographic subject of the same type as the target data for detection, a known image processing technology can be implemented.

Still alternatively, the feature calculating unit 24A can acquire N number of (plural) pieces of training data from an external information processing device via the communication unit 22, and can calculate the corresponding first-type features. Moreover, the feature calculating unit 24A can acquire the target data for detection that is stored in advance in the memory unit 20, and can calculate the second-type feature.

Given below is the explanation about the first selecting unit 24B. Based on the first-type attached information corresponding to each of plural pieces of training data, the first selecting unit 24B selects at least one or more of plural first-type features.

For example, assume that the first selecting unit 24B receives N number of first-type features from the feature calculating unit 24A. Then, using the first-type attached information corresponding to each set of training data from which one of the N number of first-type features is calculated, the first selecting unit 24B selects M number of first-type features. Herein, M represents an integer equal to or smaller than N.

More specifically, the first selecting unit 24B selects the first-type feature that is calculated from each of plural pieces of training data corresponding to plural mutually dissimilar pieces of first-type attached information. In order to determine dissimilarity and similarity, for example, the normalized mutual correlation or the Euclidean distance can be used.

That is, the first selecting unit 24B selects, from the N number of first-type features, M number of first-type features in such a way that the first-type features corresponding to similar first-type attached information are thinned out. In other words, the first selecting unit 24B selects M number of first-type features in such a way that there is a decrease in the degree of similarity among the pieces of first-type attachment information corresponding to the pieces of training data from which the N number of first-type features are calculated. Alternatively, the first selecting unit 24B selects M number of first-type features in such a way that there is a decrease in the number of matching elements among the pieces of first-type attachment information corresponding to the pieces of training data from which the N number of first-type features are calculated.

For example, assume that the M number of pieces of training data are in the form of image data and that the first-type attached information represents the capturing position expressed as the positional coordinates measured using the GPS. In that case, the first selecting unit 24B selects M number of first-type features in such a way that the capturing positions specified in the pieces of first-type attached information corresponding to the pieces of training data from which the N number of first-type features are calculated are separated from each other by a predetermined distance or more. Herein, the predetermined distance can be set in advance to the distance used in the determination of dissimilarity. Moreover, the predetermined distance can be kept variable in response to an operation instruction issued by the user.

More specifically, for example, the first selecting unit 24B classifies the N number of (plural) first-type features into plural groups each having similar pieces of first-type attached information among the N number of pieces of training data from which the N number of first-type features are calculated. Then, for each of plural groups, the first selecting unit 24B selects at least one or more features belonging to that group.

For example, assume that the training data is in the form of image data and the first-type attached information represents the capturing position expressed as the positional coordinates measured using the GPS. In that case, the first selecting unit 24B refers to the pieces of first-type attached information corresponding to the pieces of training data from which the N number of first-type features are calculated, and classifies the N number of first-type features into plural groups in each of which the capturing positions specified by the pieces of first-type attached information are similar within a predetermined range. Then, the first selecting unit 24B selects, from among the first-type features belonging to each group, a single first-type feature for that group. The first selecting unit 24B repeatedly performs the selection operation until the total number of selected first-type features becomes equal to M, and thus selects M number of first-type features. In that case, M can be set in advance to a value smaller than N.

In this way, when the pieces of first-type attached information corresponding to the pieces of training data from which the N number of first-type features are calculated are mutually dissimilar, the first selecting unit 24B selects N number of first-type features as M number of first-type features. On the other hand, when at least some of the pieces of first-type attached information corresponding to the pieces of training data from which the N number of first-type features are calculated are similar, the first selecting unit 24B selects M number of first-type features that is a smaller count than N. That is, in this case, based on the pieces of first-type attached information corresponding to plural pieces of training data, the first selecting unit 24B performs thinning in such a way that the pieces of first-type attached information become dissimilar to each other, and selects some of the N number of first-type features so that M number of first-type features, which is a smaller count than N, are selected.

Then, the first selecting unit 24B outputs the selected M number of first-type features to the anomaly degree data calculating unit 24C. At that time, the first selecting unit 24B outputs, to the anomaly degree data calculating unit 24C, the data in which the selected M number of first-type features are associated to the IDs of the pieces of training data from which the M number of first-type features are calculated.

The anomaly degree data calculating unit 24C calculates anomaly degree data indicating the degree of anomaly in the target data for detection, using the selected first-type features and using the second-type feature.

Thus, the anomaly degree data represents data indicating the degree of anomaly in the target data for detection. More specifically, the anomaly degree data represents data indicating the degree of anomaly in each element constituting the target data for detection. For example, when the target data for detection is in the form of image data, the anomaly degree data represents data specifying the degree of anomaly in each pixel of the target data for detection. On the other hand, when the target data for detection is in the form of sound data, the anomaly degree data represents data indicating the degree of anomaly in each element of the waveform representing the sound data.

The anomaly degree data calculating unit 24C calculates the anomaly degree data indicating the degree of anomaly in the target data for detection, using the M number of first-type features received from the first selecting unit 24B and using the second-type feature of the target data for detection as received from the feature calculating unit 24A.

The anomaly degree data calculating unit 24C can calculate the anomaly degree data according to an arbitrary known method. For example, the anomaly degree data calculating unit 24C can calculate the anomaly degree data in an identical manner to Patent Literature 1, Patent Literature 2, Non Patent Literature 1, or Non Patent Literature 2.

More particularly, for example, the anomaly degree data calculating unit 24C can calculate, as the anomaly degree, the difference between the second-type feature of each pixel of the target data for detection, which is in the form of image data, and the first-type feature of the corresponding pixel that constitutes each of the M number of pieces of training data. As a result of performing the anomaly degree calculation operation on a pixel-by-pixel basis, the anomaly degree data calculating unit 24C can calculate the anomaly degree data indicating the degree of anomaly in each pixel.

The display control unit 24D displays the anomaly degree data in the display unit 26. Thus, the display control unit 24D enables the user to visualize the anomaly sections included in the target data for detection.

Meanwhile, it is desirable that the display control unit 24D displays the anomaly degree data in the display unit 26 in a display form that is in accordance with the degree of anomaly. For example, the display control unit 24D displays the anomaly degree data in a display form that draws attention in proportion to the degree of anomaly. For example, regarding the anomaly degree data, the display control unit 24D displays, in the display unit 26, a heat map having red color used in proportion for the sections having high degrees of anomaly and having blue color used in proportion for the sections having low degrees of anomaly. At that time, the display control unit 24D can display the heat map in a transparent manner and can superimpose it on the target data for detection.

As a result, by looking at the display unit 26, the user becomes able to easily check the degree of anomaly at each position in the target data for detection.

Meanwhile, regarding the sections in which the degree of anomaly in the anomaly degree data is equal to or greater than a threshold value, the display control unit 24D can enclose those sections in rectangles for highlighting purpose.

Moreover, the display control unit 24D can display, in the display unit 26, the anomaly degree data along with at least either the target data for detection or the training data. For example, the display control unit 24D can display the anomaly degree data side-by-side with at least either the target data for detection or the training data in the display unit 26. Moreover, the display control unit 24D either can display, in the display unit 26, all of M number of pieces of training data, from which M number of first-type features selected by the first selecting unit 24B, are calculated; or can display, in the display unit 26, any one of the M number of pieces of training data. Alternatively, the display control unit 24D can display, in the display unit 26, such pieces of training data, from among the M number of pieces of training data, which are either most similar or most dissimilar to the target data for detection.

When the anomaly degree data and at least either the target data for detection or the training data is displayed in the display unit 26, the user becomes able to easily confirm the target data for detection containing the anomaly sections and the aspects in the normal condition in which the target data for detection does not contain anomaly sections.

Meanwhile, the display control unit 24D can also perform postprocessing with respect to the anomaly degree data. For example, with respect to the anomaly degree data, the display control unit 24D can perform, as postprocessing, a correction operation for displaying a predetermined target region in a highlighted manner. For example, the target region indicates a specific object included in the target data for detection, or indicates the region of a specific object. However, that is not the only possible case.

Given below is the explanation of a flow of the information processing performed by the processing unit 24 of the anomaly detection device 10.

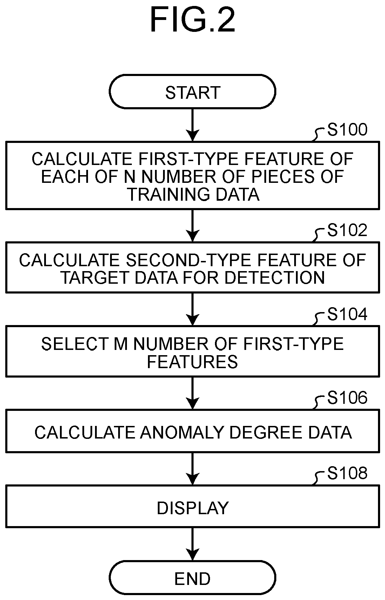

Fig. 2 is a flowchart for explaining an exemplary flow of the information processing performed in the anomaly detection device 10.

The feature calculating unit 24A calculates the first-type feature of each of N number of pieces of training data stored in the training data DB 20A (Step S100). Moreover, the feature calculating unit 24A calculates the second-type feature of the target data for detection (Step S102).

Based on the first-type attached information corresponding to each of the N number of pieces of training data, the first selecting unit 24B selects M number of first-type features that represent at least one or more of the first-type features calculated at Step S100 from N number of pieces of training data (Step S104).

The anomaly degree data calculating unit 24C calculates the anomaly degree data using the M number of first-type features selected at Step S104 and using the second-type feature calculated at Step S102 (Step S106).

The display control unit 24D displays the anomaly degree data, which is generated at Step S106, in the display unit 26 (Step S108). That marks the end of the present routine.

As explained above, an anomaly detection program that is executed in the anomaly detection device 10 according to the first arrangement includes a feature calculation step executed by the feature calculating unit 24A, a first selection step executed by the first selecting unit 24B, and an anomaly degree data calculation step executed by the anomaly degree data calculating unit 24C. In the feature calculation step, the first-type feature of each of plural (N number of) pieces of training data is calculated or referred to, and the second-type feature of the target data for detection is calculated or referred to. In the first selection step, based on the first-type attached information corresponding to each of plural pieces of training data, at least one or more of plural first-type features are selected. In the anomaly degree data calculation step, anomaly degree data indicating the degree of anomaly in the target data for detection, is calculated using the selected first-type features and using the second-type feature.

In the conventional technology, anomaly detection is performed using plural similar pieces of training data, that is, using plural biased pieces of training data; and there are times when the accuracy of anomaly detection undergoes a decline due to the bias in the pieces of training data. That is because, when a dataset made of plural pieces of training data includes a large number of mutually similar pieces of training data, only the mutually similar pieces of training data are referred to at the time of calculating the difference in the feature space; and it likely results in excess detection of anomaly regions or results in failure to detect anomaly regions. That is, greater the bias in the pieces of data in a dataset to be used in anomaly detection, the greater is the scope for a decline in the detection accuracy. In an identical manner, in an anomaly detection method in which learning of a deep neural network is involved, as a result of using a model learnt based on plural biased pieces of data, there is a possibility of a decline in the accuracy of anomaly detection. Moreover, in the conventional technology, an operation is performed to thin out the dataset samples using the features of the actual training data, and an operation is performed to reduce the number of dimensions of the feature vectors of the training data. However, the local bias in the data is not held down, thereby sometimes resulting in a decline in the accuracy of anomaly detection. Thus, in the conventional technology, there are times when the accuracy of anomaly detection undergoes a decline.

In contrast, in the anomaly detection program according to the first arrangement, based on the pieces of first-type attached information corresponding to plural pieces of training data, at least one or more of plural first-type features, which is calculated from plural pieces of training data, is selected. That is, in the anomaly detection program according to the first arrangement, instead of using plural actual pieces of training data, the pieces of first-type attached information corresponding to plural pieces of training data are used, and at least one or more of plural first-type features, which is calculated from plural pieces of training data, is selected. Then, in the anomaly detection program according to the first arrangement, the anomaly degree data is calculated using the selected first-type features and using the second-type feature of the target data for detection.

Hence, in the anomaly detection program according to the first arrangement, the local bias in plural pieces of training data, which is used in calculating the anomaly degree data, is held down, thereby enabling holding down a decline in the accuracy of anomaly detection. Moreover, in the anomaly detection program according to the first arrangement, the first-type features are not selected based on the actual pieces of training data but are selected based on the pieces of first-type attached information corresponding to the pieces of training data. As a result, it becomes possible to hold down the bias in plural pieces of training data used in calculating plural first-type features. For that reason, the local bias in plural pieces of training data, which is used in calculating the anomaly degree data, is held down, thereby enabling holding down a decline in the accuracy of anomaly detection.

Thus, the anomaly detection program according to the first arrangement enables achieving enhancement in the accuracy of anomaly detection according to an arbitrary anomaly detection method.

Moreover, in the anomaly detection program according to the first arrangement, the first-type features are selected not based on the actual pieces of training data but based on the pieces of first-type attached information corresponding to the pieces of training data. Hence, as compared to the case in which dataset samples are thinned out using the actual training data, the bias in the pieces of training data can possibly be held down at a fast rate and with a high degree of accuracy. More specifically, as a result of using the first-type attached information representing the acquisition conditions in the form of the acquisition timing such as the capturing timing and the acquisition environment such as the capturing position, the first-type features can be selected in such a way that the bias in the pieces of training data can be held down at a fast rate and with a high degree of accuracy.

Furthermore, in the anomaly detection program according to the first arrangement, as a result of selecting only some of plural first-type features in the first selection step, the number of first-type features used in calculating the anomaly degree data is reduced, thereby enabling achieving trimming, achieving reduction in the processing load, and achieving enhancement in the processing speed.

### Second arrangement

In a second arrangement, the explanation is given about a case in which, from M number of first-type features selected by the first selecting unit 24B, first-type features satisfying specific conditions are further selected.

In the second arrangement, the same functions and the same configurations as the first arrangement described above are referred to by the same reference numerals, and their detailed explanation is not given again.

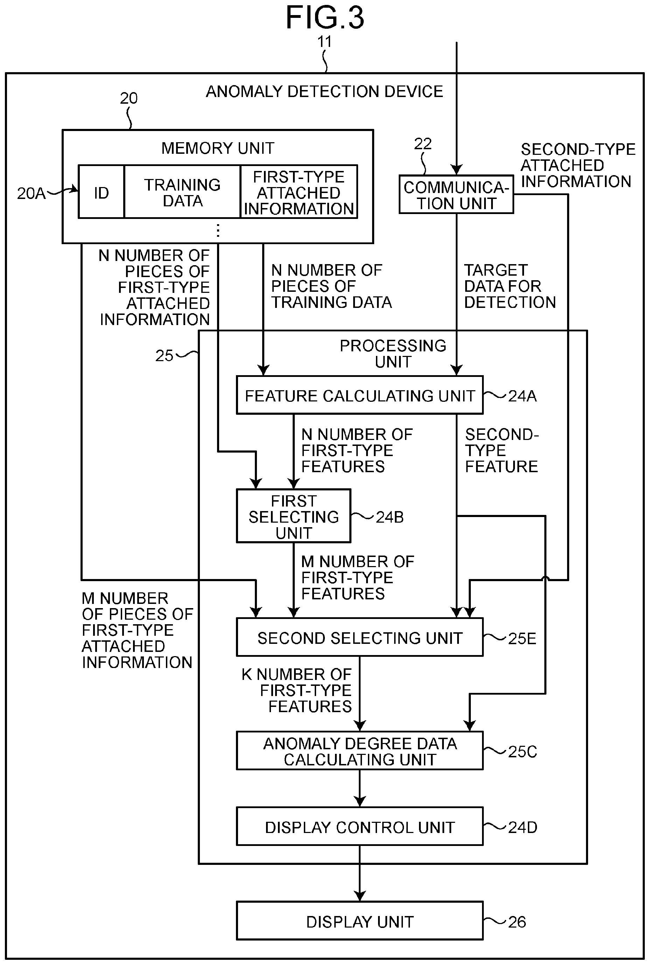

Fig. 3 is a schematic diagram illustrating an example of an anomaly detection device 11 that executes an anomaly detection program and implements an anomaly detection method according to the second arrangement. Herein, the anomaly detection device 11 is a computer that detects anomalies in the target data for detection.

The anomaly detection device 11 includes the memory unit 20, the communication unit 22, a processing unit 25, and the display unit 26. Thus, other than including the processing unit 25 instead of including the processing unit 24, the anomaly detection device 11 has an identical configuration to the anomaly detection device 10 according to the first arrangement described above.

In the second arrangement, in an identical manner to the first arrangement described above, the explanation is given about an example in which the target data for detection and the training data is in the form of image data.

The processing unit 25 includes the feature calculating unit 24A, the first selecting unit 24B, an anomaly degree data calculating unit 25C, the display control unit 24D, and a second selecting unit 25E.

From among the feature calculating unit 24A, the first selecting unit 24B, the anomaly degree data calculating unit 25C, the display control unit 24D, and the second selecting unit 25E, at least one unit is implemented using, for example, one or more processors. For example, each of the abovementioned units can be implemented by causing a processor such as a CPU to execute a computer program, that is, can be implemented using software. Alternatively, the abovementioned units can be implemented using a processor such as a dedicated integrated circuit (IC), that is, can be implemented using hardware. Still alternatively, the abovementioned units can be implemented using a combination of software and hardware. When plural processors is used, each processor can be used to implement one of the units or to implement two or more units.

The feature calculating unit 24A, the first selecting unit 24B, and the display control unit 24D are identical to the first arrangement described above.

In an identical manner to the first arrangement described above, the feature calculating unit 24A acquires, as plural pieces of training data, N number of pieces of training data from the training data DB 20A; and calculates N number of first-type features corresponding to the N number of pieces of training data. In an identical manner to the first arrangement, the first selecting unit 24B selects, from among the N number of first-type features, M number of first-type features (where M≤N holds true) using the pieces of first-type attached information corresponding to the pieces of training data from which the first-type features are calculated.

The second selecting unit 25E selects K number of first-type features from among the M number of first-type features selected by the first selecting unit 24B. Herein, K is an integer equal to or smaller than M (i.e., K<M holds true).

More specifically, the second selecting unit 25E selects K number of first-type features that satisfy at least one of the following conditions: a condition indicating that, from among the M number of first-type features selected by the first selecting unit 24B, the K number of first-type features are similar to the second-type feature of the target data for detection; and a condition indicating that the K number of features are calculated from plural pieces of training data corresponding to such pieces of first-type attached information which are similar to the second-type attached information corresponding to the target data for detection.

As explained earlier, the first-type features and the second-type feature imply at least either feature vectors or feature maps.

Consider a case in which the second selecting unit 25E selects, from among the M number of first-type features selected by the first selecting unit 24B, K number of first-type features that are similar to the second-type feature corresponding to the target data for detection.

In that case, the second selecting unit 25E can implement the k-nearest neighbor algorithm, k-NN) and can select, from among the M number of first-type features selected by the first selecting unit 24B, K number of first-type features that are similar to the second-type feature corresponding to the target data for detection. As long as K is set in advance to be equal to or smaller than M, it serves the purpose.

Alternatively, for example, the second selecting unit 25E can select K number of first-type features using, as feature vectors, vectors in which some part of a feature map is arranged as unidimensional vectors. In that case, the second selecting unit 25E uses the feature maps expressed by the M number of first-type features and uses the feature map expressed by the second-type feature, and compares the degree of similarity between the feature values at the same element positions. Herein, an element position implies, for example, a pixel position. Then, the second selecting unit 25E can select K number of first-type features in descending order of the degrees of similarity. Herein, In order to determine the similarity or the distance, for example, the normalized mutual correlation or the Euclidean distance can be used.

Meanwhile, the second selecting unit 25E can select, as K number of first-type features from among the M number of first-type features, one or more first-type features having the degrees of similarity with the second-type feature to be equal to or greater than a predetermined threshold value.

Subsequently, consider a case in which, from among the M number of first-type features selected by the first selecting unit 24B, the second selecting unit 25E selects K number of first-type features calculated from plural pieces of training data corresponding to the pieces of first-type attached information that are similar to the second-type attached information corresponding to the target data for detection.

The second-type attached information is related to the target data for detection and represents the attached information with respect to the target data for detection. In the second arrangement, the second-type attached information represents information indicating the acquisition conditions regarding the target data for detection. The acquisition conditions are identical to the explanation given earlier. Thus, other than the fact that the second-type attached information is related to the target data for detection instead of the training data, the second-type attached information is identical to the first-type identical information.

The second selecting unit 25E acquires the second-type attached information corresponding to the target data for detection from an external information processing device via the communication unit 22. Alternatively, the second selecting unit 25E can acquire the second-type attached information corresponding to the target data for detection from the memory unit 20.

The second selecting unit 25E acquires M number of pieces of first-type attached information corresponding to the pieces of training data that were used in calculating the M number of first-type features received from the first selecting unit 24B. In order to acquire the M number of pieces of first-type attached information, the second selecting unit 25E can acquire, from the training data DB 20A, the pieces of first-type attached information corresponding to the IDs received along with the first-type features from the first selecting unit 24B.

Then, the second selecting unit 25E selects, from among the M number of pieces of first-type attached information, the K number of pieces of first-type attached information that are similar to the second-type attached information.

For example, consider a case in which the training data and the target data for detection is in the form of image data and in which the pieces of first-type attached information and the second-type attached information represent capturing positions indicated by the positional coordinates measured using the GPS.

In that case, the second selecting unit 25E selects, from among the acquired M number of pieces of first-type attached information, the pieces of first-type attached information that indicate the capturing positions within a predetermined distance from the capturing position indicated by the acquired second-type attached information. Herein, the predetermined distance can be set in advance to the distance used in the determination of similarity. Moreover, the predetermined distance can be kept variable in response to an operation instruction issued by the user.

Alternatively, the second selecting unit 25E can select the K number of pieces of first-type attached information by selecting, from among the acquired M number of pieces of first-type attached information, the pieces of first-type attached information indicating the capturing positions in increasing order of distance from the capturing position indicated by the acquired second-type attached information.

Consider a case in which the pieces of first-type attached information and the second-type attached information represent an example of the acquisition timing in the form of the capturing date and time. In that case, the second selecting unit 25E selects, from among the acquired M number of pieces of first-type attached information, the pieces of first-type attached information each indicating the capturing date and time within a predetermined period of time from the capturing date and time indicated by the acquired second-type attached information. Herein, the predetermined period of time can be set in advance to the distance used in the determination of dissimilarity. Moreover, the predetermined period of time can be kept variable in response to an operation instruction issued by the user.

Alternatively, the second selecting unit 25E can select K number of pieces of first-type attached information by selecting, from among the acquired M number of pieces of first-type attached information, the pieces of first-type attached information each indicating the capturing date and time in order starting from the nearest capturing date and time up to the capturing date and time indicated by the acquired second-type attached information.

Then, the second selecting unit 25E can select, from among the M number of first-type features, K number of first-type features calculated from the pieces of training data corresponding to the selected K number of pieces of first-type attached information.

Consider a case in which the second selecting unit 25E selects, from among the M number of first-type features selected by the first selecting unit 24B, the first-type features that are similar to the second-type feature corresponding to the target data for detection and that are calculated from plural pieces of training data corresponding to the pieces of first-type attached information that are similar to the second-type attached information corresponding to the target data for detection.

In that case, the second selecting unit 25E can select, from among the M number of first-type features, K number of first-type features that satisfy: a first condition indicating that, from among the M number of first-type features selected by the first selecting unit 24B, the selected first-type features are similar to the second-type feature corresponding to the target data for detection; and a second condition indicating that the selected first-type features represent the first-type features calculated from plural pieces of training data corresponding to the pieces of first-type attached information that are similar to the second-type attached information corresponding to the target data for detection.

Subsequently, the second selecting unit 25E outputs the K number of first-type features to the anomaly degree data calculating unit 25C. At that time, the second selecting unit 25E outputs, to the anomaly degree data calculating unit 25C, the data in which the selected K number of first-type features are associated to the IDs of the pieces of training data from which the K number of first-type features are calculated.

Except for the fact that the anomaly degree data calculating unit 25C uses the K number of first-type features received from the second selecting unit 25E instead of using the M number of features received from the first selecting unit 24B, the anomaly degree data calculating unit 25C is identical to the anomaly degree data calculating unit 24C according to the first arrangement described above.

That is, the anomaly degree data calculating unit 25C calculates the anomaly degree data indicating the degree of anomaly in the target data for detection, using the K number of first-type features selected by the second selecting unit 25E and using the second-type feature.

Given below is the explanation of a flow of the information processing performed by the processing unit 25 of the anomaly detection device 11.

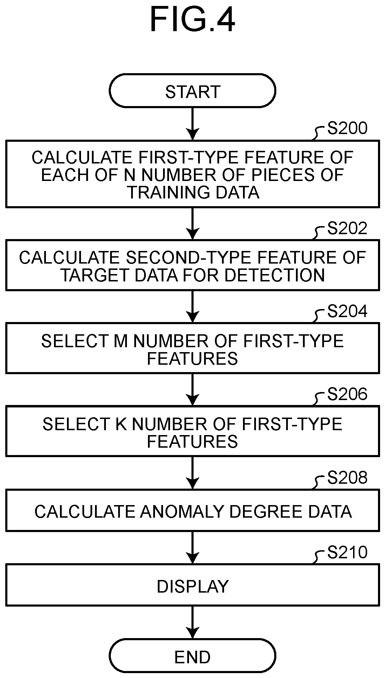

Fig. 4 is a flowchart for explaining an exemplary flow of the information processing performed in the anomaly detection device 11.

The feature calculating unit 24A calculates the first-type feature of each of N number of pieces of training data stored in the training data DB 20A (Step S200). Moreover, the feature calculating unit 24A calculates the second-type feature of the target data for detection (Step S202).

Based on the first-type attached information corresponding to each of the N number of pieces of training data, the first selecting unit 24B selects M number of first-type features representing at least one or more of the first-type features calculated at Step S200 from N number of pieces of training data (Step S204).

The second selecting unit 25E selects K number of first-type features, which is a count equal to or smaller than M, from the M number of first-type features selected at Step S204 (Step S206).

The anomaly degree data calculating unit 25C calculates the anomaly degree data using the K number of first-type features selected at Step S206 and using the second-type feature calculated at Step S202 (Step S208).

The display control unit 24D displays the anomaly degree data, which is generated at Step S208, in the display unit 26 (Step S210). That marks the end of the present routine.

As explained above, an anomaly detection program executed in the anomaly detection device 11 according to the second arrangement further includes a second selection step executed by the second selecting unit 25E. In the second selection step, from among the M number of first-type features selected in the first selection step, such first-type features are selected which satisfy at least either the condition of being similar to the second-type feature of the target data for detection or the condition of being calculated from plural pieces of training data corresponding to the pieces of first-type attached information that are similar to the second-type attached information corresponding to the target data for detection. In the anomaly degree data calculation step executed by the anomaly degree data calculating unit 25C, the anomaly degree data indicating the degree of anomaly in the target data for detection is calculated using the K number of first-type features selected in the second selection step and using the second-type feature corresponding to the target data for detection.

In this way, the anomaly detection program according to the second arrangement selects K number of first-type features (where K<M holds true) that, from among the M number of first-type features selected in the first selection step, are at least either similar to the second-type feature corresponding to the target data for detection or correspond to the pieces of first-type attached information that are similar to the second-type attached information. Then, in the anomaly degree data calculation step, the anomaly degree data indicating the degree of anomaly in the target data for detection is calculated using the selected K number of first-type features and using the second-type feature.

Hence, the anomaly detection program according to the second arrangement further includes selecting K number of first-type features that, from among the M number of first-type features selected in the first selection step according to the first arrangement described above, are at least either similar to the second-type feature corresponding to the target data for detection or correspond to the pieces of first-type attached information that are similar to the second-type attached information. Then, in the anomaly detection program according to the second arrangement, the anomaly degree data indicating the degree of anomaly in the target data for detection is calculated using the selected K number of first-type features and using the second-type feature corresponding to the target data for detection.

Hence, in the anomaly detection program according to the second arrangement, in addition to achieving the effects identical to the effects achieved according to the first arrangement described above, the anomaly degree data indicating the anomalies can be calculated with a higher degree of accuracy.

Moreover, in the anomaly detection program according to the second arrangement, at the time of implementing the anomaly detection method in which calculating the anomaly degree data includes a step for calculating the difference between features, the data to be referred to for calculating the difference can be retrieved based on the pieces of first-type attached information and the second-type attached information. Hence, the anomaly detection program according to the second arrangement enables achieving improvement in the anomaly detection performance and enables fast processing.

### First modification example

In the arrangements described above, the explanation is given about an example in which the training data and the target data for detection is in the form of image data.

However, as explained earlier, as long as the target data for detection and the training data enables expressing the observation values as scalars, vectors, or multidimensional tensors, such as sound data, time-series video data, or skeleton data in which the postures of a human body are specified as graphs; the data can be of any type.

For example, consider a case in which the training data and the target data for detection is in the form of sound data. Herein, the sound data represents, for example, the data of the sounds collected using a microphone.

In that case, as explained earlier, as an example of the pieces of first-type attached information of the pieces of training data in the form of the sound data and the second-type attached information of the target data for detection, the acquisition timing represents, for example, the sound generation timing. The sound generation timing is expressed using, for example, the date and time of generation of the sound or the sound observation timing. Moreover, as an example of the pieces of first-type attached information and the second-type attached information, the location included in the acquisition environment represents the acquisition location of the sound data such as the sound observation position or the sound collection position. Furthermore, as an example of the pieces of first-type attached information and the second-type attached information, the acquisition source included in the acquisition environment represents the information indicating the sound generation source. Moreover, as an example of the pieces of first-type attached information and the second-type attached information, the type included in the acquisition environment represents the information indicating the language in which the sound is uttered.

Moreover, for example, when the training data and the target data for detection is in the form of sound data, waveform data in which the element values of each set of sound data are used as feature values can be used as a feature map. Furthermore, for example, when the training data and the target data for detection is in the form of sound data, a feature vector is known that is output in the fully-connected layer when sound data is input to a pre-trained neural network. Meanwhile, as long as the anomaly degree data indicates the degree of anomaly in each element in the waveform data representing the sound data as the target data for detection, it serves the purpose.

Other than the points explained above, the anomaly detection devices 10 and 11 can calculate the anomaly degree data in an identical manner as explained in the arrangements.

Given below is the explanation about an exemplary hardware configuration of the anomaly detection devices 10 and 11 according to the arrangements described above.

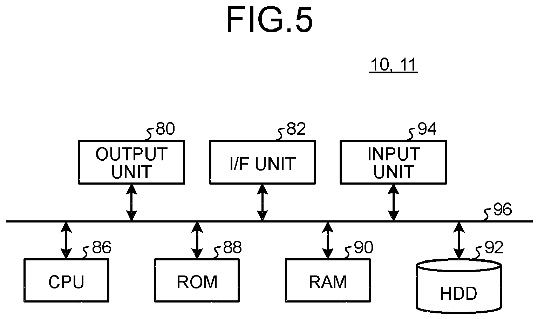

Fig. 5 is an exemplary hardware configuration diagram of the anomaly detection devices 10 and 11 according to the arrangements described above.

The anomaly detection devices 10 and 11 according to the arrangements described above have the hardware configuration of a normal computer that includes a control device such as a CPU 86; memory devices such as a read only memory (ROM) 88, a random access memory (RAM) 90, and a hard disk drive (HDD) 92; an interface (I/F) unit 82 that represents the interface with various devices; an output unit 80 that outputs a variety of information such as the output information; an input unit 94 that receives user operations; and a bus 96 that connects the other constituent elements to each other.

In the anomaly detection devices 10 and 11 according to the arrangements described above, the CPU 86 reads a computer program from the ROM 88, loads it into the RAM 90, and executes it. As a result, the abovementioned constituent elements are implemented in the computer.

Meanwhile, the computer program meant for implementing the abovementioned operations of the anomaly detection devices 10 and 11 according to the arrangements described above can alternatively be stored in the HDD 92. Still alternatively, the computer program meant for implementing the abovementioned operations of the anomaly detection devices 10 and 11 according to the arrangements described above can be stored in advance in the ROM 88.

Still alternatively, the computer program meant for implementing the abovementioned operations of the anomaly detection devices 10 and 11 according to the arrangements described above can be stored as an installable file or an executable file in a computer-readable memory medium such as a compact disc read only memory (CD-ROM), a compact disc recordable (CD-R), a memory card, a digital versatile disk (DVD), or a flexible disk (FD); and can be provided as a computer program product. Still alternatively, the computer program meant for implementing the abovementioned operations of the anomaly detection devices 10 and 11 according to the arrangements described above can be stored in a downloadable manner in a computer connected to a network such as the Internet. Still alternatively, the computer program meant for implementing the abovementioned operations of the anomaly detection devices 10 and 11 according to the arrangements described above can be distributed via a network such as the Internet.

The computer program meant for implementing the abovementioned operations of the anomaly detection devices 10 and 11 according to the arrangements described above can be implemented in an arbitrary anomaly detector that calculates anomaly degree data during the process of anomaly detection. That is, in the anomaly degree data calculating unit 24C and the anomaly degree data calculating unit 25C, an arbitrary anomaly detector can be installed. When the abovementioned functional units of the anomaly detection devices 10 and 11 according to the arrangements described above are implemented as modules in an arbitrary anomaly detector, it becomes possible to hold down excess detection of normal structures that are easily mistakable as anomalies. Moreover, regarding the modules of abovementioned functional units of the anomaly detection devices 10 and 11 according to the arrangements described above, since the learning of the actual modules is not required, the anomaly detection accuracy of an arbitrary anomaly detection method can be enhanced in an easy and effective manner.

Thus, it is an objective of the application concerned to provide an anomaly detection device, an anomaly detection method, and a computer program product that enable achieving enhancement in the accuracy of anomaly detection in an arbitrary anomaly detection method.

While certain arrangements have been described, these arrangements have been presented by way of example only, and are not intended to limit the scope of the inventions. Indeed, the novel arrangements described herein may be embodied in a variety of other forms; furthermore, various omissions, substitutions and changes in the form of the arrangements described herein may be made.

Example 1. According to an arrangement, an anomaly detection device (10, 11) includes a feature calculating unit (24A), a first selecting unit (24B), and an anomaly degree data calculating unit (24C, 25C). The feature calculating unit (24A) calculates or refers to a first-type feature of each of plural pieces of training data, and calculates or refers to a second-type feature of target data for detection. The first selecting unit (24B), based on first-type attached information corresponding to each of the plural pieces of training data, selects at least one or more of plural first-type features. The anomaly degree data calculating unit (24C, 25C) calculates anomaly degree data indicating a degree of anomaly in the target data for detection, using the selected first-type feature and using the second-type feature.

Example 2. In the anomaly detection device (10, 11) according to example 1, the first selecting unit selects the first-type feature calculated from each of the plural pieces of training data corresponding to plural dissimilar pieces of the first-type attached information.

Example 3. In the anomaly detection device (10, 11) according to example 1, the first selecting unit classifies plural first-type features into plural groups for each of which plural pieces of first-type attached information of the plural pieces of training data from which the plural first-type features are calculated, are similar to each other. Additionally, the first selecting unit selects, for each of the plural groups, at least one or more of the first-type features belonging a concerned group.

Example 4. In the anomaly detection device (10, 11) according to example 1, the first selecting unit selects, based on the first-type attached information corresponding to each of the plural pieces of training data, some of the plural first-type features.

Example 5. The anomaly detection device (10, 11) according to example 1 further includes a second selecting unit (25E) that selects, from among the plural first-type features selected by the first selecting unit, the first-type feature satisfying at least either a condition of being similar to the second-type feature of the target data for detection or a condition of being calculated from each of the plural pieces of training data corresponding to the first-type attached information similar to second-type attached information corresponding to the target data for detection. The anomaly degree data calculating unit calculates anomaly degree data indicating the degree of anomaly in the target data for detection, using the first-type feature selected by the second selecting unit and using the second-type feature.

Example 6. The anomaly detection device (10, 11) according to example 1 further includes a display control unit (24D) that displays the anomaly degree data in a display unit.

Example 7. In the anomaly detection device (10, 11) according to example 6, the display control unit (24D) displays, in the display unit, the anomaly degree data in a display form that is in accordance with a degree of anomaly.

Example 8. In the anomaly detection device (10, 11) according to example 6, the display control unit (24D) displays, in the display unit, the anomaly degree data and at least either the target data for detection or the training data.

Example 9. In the anomaly detection device (10, 11) according to example 1, the target data for detection and the training data is image data or sound data.

Example 10. In the anomaly detection device (10, 11) according to example 5, the first-type attached information indicates an acquisition condition of the training data, and the second-type attached information indicates an acquisition condition of the target data for detection.

Example 11. According to an arrangement, an anomaly detection method is implemented by a computer and includes feature-calculating, first-type-selecting, and anomaly-degree-data-calculating. The feature-calculating performs calculating or referring to a first-type feature of each of plural pieces of training data, and calculating or referring to a second-type feature of target data for detection. The first-type-selecting performs, based on first-type attached information corresponding to each of the plural pieces of training data, selecting at least one or more of plural first-type features. The anomaly-degree-data-calculating performs calculating anomaly degree data indicating a degree of anomaly in the target data for detection, using the selected first-type feature and using the second-type feature.

Example 12. According to an arrangement, a computer program product has a computer readable medium including an anomaly detection program. When executed by a computer, the anomaly detection program causes the computer to execute feature-calculating, first-type-selecting, and anomaly-degree-data-calculating. The feature-calculating performs calculating or referring to a first-type feature of each of plural pieces of training data, and calculating or referring to a second-type feature of target data for detection. The first-type-selecting performs, based on first-type attached information corresponding to each of the plural pieces of training data, selecting at least one or more of plural first-type features. The anomaly-degree-data-calculating performs calculating anomaly degree data indicating a degree of anomaly in the target data for detection, using the selected first-type feature and using the second-type feature.

## Claims

1. An anomaly detection device (10, 11), comprising:
a feature calculating unit (24A) that
is configured to calculate or refer to a first-type feature of each of plural pieces of training data, and calculate or refer to a second-type feature of target data for detection;
a first selecting unit (24B) that, based on first-type attached information corresponding to each of the plural pieces of training data, is configured to select at least one or more of plural first-type features; and
an anomaly degree data calculating unit (24C, 25C) that is configured to calculate anomaly degree data indicating a degree of anomaly in the target data for detection, using the selected first-type feature and using the second-type feature.

2. The anomaly detection device (10, 11) according to claim 1, wherein the first selecting unit is configured to select the first-type feature calculated or referred to from each of the plural pieces of training data corresponding to plural dissimilar pieces of the first-type attached information.

3. The anomaly detection device (10, 11) according to any preceding claim, wherein the first selecting unit is configured to:
classify plural first-type features into plural groups for each of which plural pieces of first-type attached information of the plural pieces of training data from which the plural first-type features are calculated or referred to, are similar to each other, and
select, for each of the plural groups, at least one or more of the first-type features belonging a concerned group.

4. The anomaly detection device (10, 11) according to claim 1, wherein the first selecting unit is configured to select, based on the first-type attached information corresponding to each of the plural pieces of training data, some of the plural first-type features.

5. The anomaly detection device (10, 11) according to any preceding claim, further comprising:
a second selecting unit (25E) configured to select, from among the plural first-type features selected by the first selecting unit, the first-type feature satisfying at least either a condition of being similar to the second-type feature of the target data for detection or a condition of being calculated from each of the plural pieces of training data corresponding to the first-type attached information similar to second-type attached information corresponding to the target data for detection, wherein
the anomaly degree data calculating unit is configured to calculate anomaly degree data indicating the degree of anomaly in the target data for detection, using the first-type feature selected by the second selecting unit and using the second-type feature.

6. The anomaly detection device (10, 11) according to any preceding claim, further comprising:
a display control unit (24D) that is configured to display the anomaly degree data in a display unit.

7. The anomaly detection device (10, 11) according to claim 6, wherein the display control unit (24D) is configured to display, in the display unit, the anomaly degree data in a display form that is in accordance with a degree of anomaly.

8. The anomaly detection device (10, 11) according to either of claims 6 or 7, wherein the display control unit (24D) is configured to display, in the display unit, the anomaly degree data and at least either the target data for detection or the training data.

9. The anomaly detection device (10, 11) according to any preceding claim, wherein the target data for detection and the training data is image data or sound data.

10. The anomaly detection device (10, 11) according to claim 5, wherein
the first-type attached information indicates an acquisition condition of the training data, and
the second-type attached information indicates an acquisition condition of the target data for detection.

11. An anomaly detection method implemented by a computer, the method comprising:
feature-calculating that performs
calculating or referring to a first-type feature of each of plural pieces of training data, and calculating or referring to a second-type feature of target data for detection;
first-type-selecting that performs, based on first-type attached information corresponding to each of the plural pieces of training data, selecting at least one or more of plural first-type features; and
anomaly-degree-data-calculating that performs calculating anomaly degree data indicating a degree of anomaly in the target data for detection, using the selected first-type feature and using the second-type feature.

12. A computer program product having a computer readable medium including an anomaly detection program, wherein the anomaly detection program, when executed by a computer, causes the computer to execute:
feature-calculating that performs
calculating or referring to a first-type feature of each of plural pieces of training data, and calculating or referring to a second-type feature of target data for detection;
first-type-selecting that performs, based on first-type attached information corresponding to each of the plural pieces of training data, selecting at least one or more of plural first-type features; and
anomaly-degree-data-calculating that performs calculating anomaly degree data indicating a degree of anomaly in the target data for detection, using the selected first-type feature and using the second-type feature.
